# EUROPÄISCHE PATENTSCHRIFT

(11) **EP 2 521 758 B1**
(45) Veröffentlichungstag und Bekanntmachung des Hinweises auf die Patenterteilung: **26.04.2017**
(21) Anmeldenummer: 10798967.5
(22) Anmeldetag: 21.12.2010
(51) Int. Cl.: C10C 1/00

(54) **VORRICHTUNG UND VERFAHREN ZUM AUFTRENNEN EINER FESTSTOFFHALTIGEN, FLÜSSIGEN UND PUMPBAREN TEERSUSPENSION UND VERWENDUNG DES ABGETRENNTEN FESTSTOFFES ZUR HERSTELLUNG VON KOKS**
DEVICE AND METHOD FOR SEPARATING A SOLID MATTER-CONTAINING, LIQUID, PUMPABLE TAR SUSPENSION AND USE OF THE SEPARATED SOLID MATTER FOR PRODUCING COKE
DISPOSITIF ET PROCÉDÉ POUR SÉPARER UNE SUSPENSION DE GOUDRON LIQUIDE ET POMPABLE, CONTENANT UNE MATIÈRE SOLIDE ET L'UTILISATION DE LA MATIÈRE SOLIDE SÉPARÉE POUR LA PRODUCTION DE COKE

(30) Priorität: 06.01.2010 DE 102010004082
(43) Veröffentlichungstag der Anmeldung: 14.11.2012
(73) Patentinhaber: ThyssenKrupp Industrial Solutions AG, 45143 Essen (DE)
(72) Erfinder: THIELERT, Holger, 44379 Dortmund (DE)
(74) Vertreter: ThyssenKrupp Intellectual Property GmbH
(86) Internationale Anmeldenummer: PCT/EP2010/007840
(87) Internationale Veröffentlichungsnummer: WO 2011/082810

(56) Entgegenhaltungen:
- JP-A- 7 188 671
- US-A- 4 036 603
- US-A- 4 297 225

## Beschreibung

Die Erfindung betrifft eine Vorrichtung zum Auftrennen einer feststoffhaltigen, flüssigen und pumpbaren Teersuspension und zur anschliessenden Verwendung des darin enthaltenen abgetrennten Feststoffes, wobei diese Vorrichtung im oberen Teil eines kohlespeichernden oder kohlelagernden Behälters angeordnet ist, und wobei diese Vorrichtung aus einer Zentrifuge besteht, die einen feststoffhaltigen, pumpbaren Teer oder eine feststoffhaltige, pumpbare Teersuspension in eine flüssige Phase und die darin enthaltenen Feststoffe auftrennt, so dass der Feststoff ohne anschließende Förderung und direkt auf oder in die gelagerte Kohle gegeben werden kann, so dass nur eine Teersuspension gepumpt oder transportiert werden muss und kein bereits abgetrennter Feststoff. Die Erfindung betrifft auch ein Verfahren zum Auftrennen einer feststoffhaltigen, flüssigen und pumpbaren Teersuspension, zur Lagerung des erhaltenen Feststoffes mit Kohle und die Verwendung des Verfahrens zur Herstellung von Koks aus mit dem Feststoff versetzter Kohle.

Bei der Verkokung von Kohle zur Herstellung von Koks fällt häufig eine dickflüssige Teersuspension an, die mit Feststoffen beladen ist und die zur weiteren Verarbeitung aufgetrennt werden muss. Die Auftrennung des Feststoffes wird in der Regel aufgrund der Konsistenz des Teeres mit einer Zentrifuge vorgenommen, wobei sich nach der Auftrennung das Problem ergibt, dass der erhaltene Feststoff gefördert oder transportiert werden muss. Dies ist mit hohem Aufwand verbunden.

Verfahren zum Auftrennen von Teersuspensionen aus Verkokungsprozessen sind bekannt. Die JP 07188671 A beschreibt ein Verfahren zur Auftrennung von Teersuspensionen und zur Weiterverwendung des erhaltenen Feststoffes, wobei eine Teersuspension, die aus einem Verkokungsprozess gewonnen wird, verdünnt wird, die erhaltene Verdünnung zentrifugiert wird, und der erhaltene Feststoff und der von Feststoff befreite Teer weiterverarbeitet werden. Die GB 789709 A beschreibt ein Verfahren zur Auftrennung von flüssigen und festen Bestandteilen aus Steinkohlenteer, wobei mithilfe von geeigneten Zusatzstoffen eine wässrige Dispersion erzeugt wird, die mit einer Zentrifuge in eine überstehende flüssige Phase und die darin enthaltenen Feststoffe aufgetrennt wird.

Diese Verfahren besitzen den Nachteil, dass die erhaltenen teerhaltigen und klebrigen Feststoffe gefördert oder transportiert werden müssen. Ein gängiges Verfahren zur Weiterverwendung des Feststoffes ist beispielsweise eine Vermischung mit Ausgangskohle und deren gemeinsame Lagerung. Die zur Förderung verwendeten Vorrichtungen wie Schnecken oder Förderbänder sind jedoch durch die Konsistenz des teerhaltigen Feststoffes störanfällig, wenig effektiv oder es müssen aufwendige Zusatzvorrichtungen wie Doppelmantel-Hochdruckförderleitungen verwendet werden.

Es besteht deshalb die Aufgabe, ein Verfahren zur Verbesserung oder zur Umgehung der schwierigen Förderung des Feststoffes aus dem Auftrennen einer feststoffhaltigen, flüssigen und pumpbaren Teersuspension und zur anschliessenden Verwendung des Feststoffes zur Verfügung zu stellen, wobei der aus dem Auftrennen erhaltene Feststoff zu gelagerter Kohle gegeben werden soll.

Die Erfindung löst diese Aufgabe durch eine Vorrichtung, die aus einer Zentrifuge besteht, die im oberen inneren Bereich eines kohlespeichernden Behälters angeordnet ist, wobei die Zentrifuge mit einem Zuführungsstutzen für feststoffhaltigen, flüssigen Teer, mit einem Ableitungsstutzen für flüssiges Teerzentrifugat und im unteren Teil mit einem Auslass für den in dem Teer enthaltenen Feststoff ausgestattet ist. Die aus dem Zentrifugieren erhaltenen Feststoffe fallen nach dem Abzentrifugieren durch Schwerkraft in den kohlespeichernden Behälter, in dem die Kohle lagert.

Dadurch entfällt die Förderung des Feststoffes aus der Zentrifuge oder einem nachgelagerten Behälter in den kohlespeichernden Behälter. Die Feststoffe aus dem Zentrifugierprozess gelangen direkt fallend in den Kohlevorrat in dem kohlespeichernden Behälter. Der abzentrifugierte flüssige Teer wird durch eine Leitung mit einer Pumpe aus der Zentrifuge in dem Behälter abgeleitet. Dieser flüssige Teer kann in einen Vorlagebehälter zurückgeführt werden oder weiterverwendet werden. Die feststoffhaltige, flüssige und pumpbare Teersuspension kann vor der Zentrifugierung verdünnt oder mit Hilfsmitteln versehen werden. Bei dem kohlespeichernden Behälter kann es sich beispielhaft um ein Silo zur Kohlelagerung handeln.

Beansprucht wird insbesondere eine Vorrichtung zum Auftrennen einer feststoffhaltigen, flüssigen und pumpbaren Teersuspension aus einer Verkokungsreaktion und zur anschliessenden Verwendung des darin enthaltenen abgetrennten und durch Schwerkraft in den kohlespeichernden Behälter fallenden Feststoffes, die dadurch gekennzeichnet ist, dass
- diese aus einer Zentrifuge besteht, die im inneren Bereich eines kohlespeichernden Behälters oberhalb des Kohlevorrats angeordnet ist, und
- die Zentrifuge mit einem Zuführungsstutzen für feststoffhaltigen, flüssigen Teer ausgestattet ist und mit einem Ableitungsstutzen für flüssiges Teerzentrifugat, und
- die Zentrifuge im unteren Teil mit einem Auslass für den in dem Teer enthaltenen Feststoff ausgestattet ist.

Beansprucht wird auch ein Verfahren zum Auftrennen einer feststoffhaltigen, flüssigen und pumpbaren Teersuspension aus einer Verkokungsreaktion mit Verwendung des darin enthaltenen abgetrennten Feststoffes mit der Verwendung der erfindungsgemäßen Vorrichtung. Dieses ist dadurch gekennzeichnet, dass eine flüssige, feststoffhaltige und pumpbare Teersuspension in eine im oberen Bereich eines kohlespeichernden Behälters oberhalb des Kohlevorrats gelegene Zentrifuge gepumpt wird, wobei die Zentrifuge die Teersuspension in ein flüssiges Teerzentrifugat und in einen Feststoff auftrennt, und der Feststoff anschliessend ohne weitere Förderung durch Schwerkraft in den kohlespeichernden Behälter fällt, und oder Transport auf oder in die Kohle gegeben wird, die sich in dem Kohlebehälter befindet.

Der bei der Zentrifugation erhaltene, auf die Kohle gegebene Feststoff fällt durch Schwerkraft in den kohlespeichernden Behälter und wird bevorzugt mit der Kohle gelagert. Der Kohlevorrat in dem kohlespeichernden Behälter kann normal durch Setzen mit aus dem Zentrifugieren erhaltenen Feststoff gelagert werden oder auch durch geeignete Vorrichtungen mit dem aus dem Zentrifugieren erhaltenen Feststoff durchmischt werden. Bevorzugt stammt die feststoffhaltige, flüssige und pumpbare Teersuspension, die zum Zentrifugieren verwendet wird, aus einem Prozess zur Herstellung von Koks aus Kohle.

Beansprucht wird auch die Verwendung einer Kohle, die einen Feststoff enthält, der aus dem Auftrennen einer feststoffhaltigen, flüssigen und pumpbaren Teersuspension mit einer Zentrifuge im Innenraum eines kohlespeichernden Behälters erhalten wird, wobei die aus dem Zentrifugieren erhaltenen Feststoffe nach dem Abzentrifugieren durch Schwerkraft in den kohlespeichernden Behälter fallen, in dem die Kohle lagert. Diese kann insbesondere zum Verkoken und zur Herstellung von Koks verwendet werden. Beansprucht wird somit die Verwendung einer Kohle, enthaltend Feststoff aus dem Auftrennen einer feststoffhaltigen, flüssigen und pumpbaren Teersuspension durch das erfindungsgemäße Verfahren, in der eine mit aus der Zentrifuge erhaltenem Feststoff oder Teerzentrifugat versetzte Kohle zum Verkoken oder zur Herstellung von Koks verwendet wird.

Die Erfindung besitzt den Vorteil, dass keine aufwendigen Pumpvorgänge zum Fördern von Feststoff aus dem Zentrifugieren einer feststoffhaltigen, flüssigen und pumpbaren Teersuspension benötigt werden. Der Feststoff gelangt von der Zentrifuge direkt auf die lagernde Kohle. Es müssen nur feststoffhaltige, pumpbare Teersuspension oder flüssiger Teer gepumpt werden. Dadurch wird eine erhebliche Menge an Energie oder an Geräten eingespart.

Die erfindungsgemäße Ausgestaltung eines Verfahrens zur Verkokung von Kohle wird anhand von zwei Zeichnungen genauer erläutert. Die erste Zeichnung zeigt eine Vorrichtung aus dem Stand der Technik, die zweite Zeichnung zeigt eine erfindungsgemäße Vorrichtung. Das erfindungsgemäße Verfahren ist nicht auf diese Ausführungsform beschränkt.

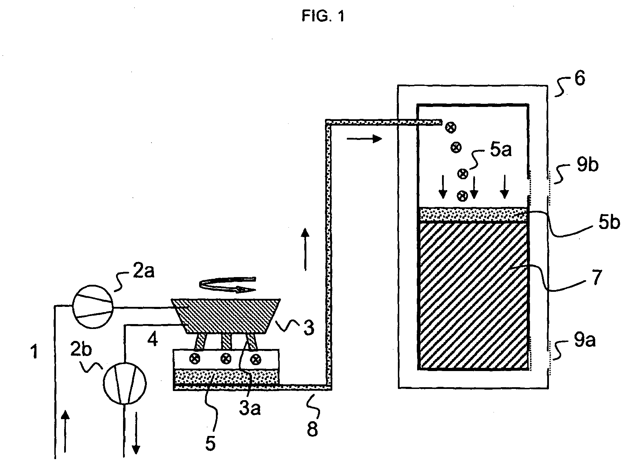

FIG. 1 zeigt eine Vorrichtung nach dem Stand der Technik. Die flüssige, feststoffhaltige und pumpbare Teersuspension (**1**) wird mit einer Pumpe (**2a**) zu einer Zentrifuge (**3**) gepumpt. Dort erhält man den überstehenden, flüssigen Teer (**4**), der mit einer Pumpe (**2b**) zur weiteren Verwendung gepumpt wird, und den vormals darin enthaltenen abgetrennten Feststoff (**5**). Dieser wird in einen Behälter (**6**) zur Lagerung von Kohle (**7**) gegeben. Der transportierte Feststoff aus dem Teer (**5a**) wird über ein Förderband (**8**) oder eine Transportschnecke in den Behälter (**6**) gegeben. Der Feststoff aus dem Teer (**5b**) wird auf der Kohle (**7**) gelagert. Die Kohle (**7**) kann über eine geeignete Öffnung (**9a**) aus dem Behälter (**6**) entnommen werden oder über eine weitere Öffnung (**9b**) nachgefüllt werden.

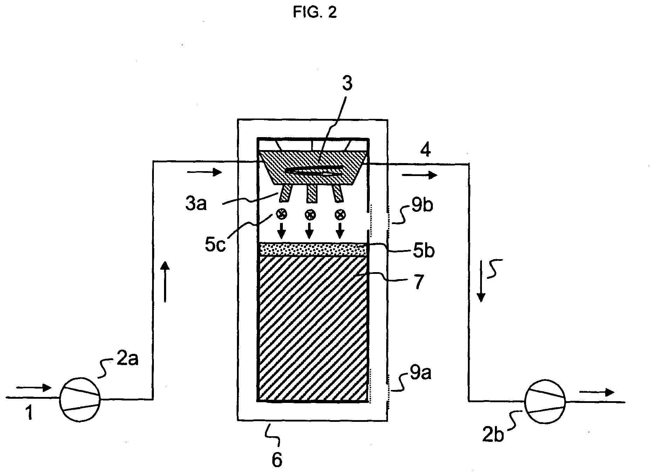

FIG. 2 zeigt eine erfindungsgemäße Vorrichtung. Die flüssige, feststoffhaltige und pumpbare Teersuspension (**1**) wird mit einer Pumpe (**2a**) zu einer Zentrifuge (**3**) gepumpt. Die Zentrifuge (**3**) befindet sich dabei erfindungsgemäß im oberen inneren Bereich des Behälters (**6**) zur Lagerung von Kohle (**7**). Dort wird diese in überstehenden flüssigen Teer (**4**) und den in der Teersuspension enthaltenen abgetrennten Feststoff (**5**) aufgetrennt. Dieser fällt aus den Öffnungen (**3a**) der Zentrifuge (**3**) durch Schwerkrafteinwirkung (**5b**) auf die Kohle (**7**) und wird dort gelagert (**5c**). Der flüssige Teer (**4**) wird über eine Pumpe (**2b**) abgepumpt. Die Kohle (**7**) kann über eine geeignete Öffnung (**9a**) aus dem Behälter (**6**) entnommen werden oder über eine weitere Öffnung (**9b**) nachgefüllt werden.

### Bezugszeichenliste

- 1: Flüssige, feststoffhaltige und pumpbare Teersuspension
- 2a: Pumpe (für flüssige, feststoffhaltige und pumpbare Teersuspension)
- 2b: Pumpe (für flüssigen Teer)
- 3: Zentrifuge
- 3a: Öffnungen der Zentrifuge
- 4: Flüssiger Teer oder Teerzentrifugat
- 5: Abgetrennter Feststoff
- 5a: Transportierter Feststoff
- 5b: Auf Kohle lagernder Feststoff
- 5c: Aus Zentrifuge fallender Feststoff
- 6: Behälter
- 7: Kohle
- 8: Förderband
- 9a: Öffnung zur Entnahme von Kohle
- 9b: Öffnung zum Nachfüllen von Kohle

## Patentansprüche

1. Vorrichtung zum Auftrennen einer feststoffhaltigen, flüssigen und pumpbaren Teersuspension (1) mit anschließender förderungsloser Verwendung des darin enthaltenen abgetrennten und durch Schwerkraft direkt in den kohlespeichernden Behälter (6) fallenden Feststoffs (5),
**dadurch gekennzeichnet, dass**
(a) diese aus einer Zentrifuge (3) besteht, die im oberen inneren Bereich eines kohlespeichernden Behälters (6) angeordnet ist, und
(b) die Zentrifuge (3) mit einem Zuführungsstutzen für feststoffhaltigen, flüssigen Teer (1) ausgestattet ist und mit einem Ableitungsstutzen für flüssiges Teerzentrifugat (4), und
(c) die Zentrifuge (3) im unteren Teil mit einem Auslass (3a) für den in dem Teer (1) enthaltenen Feststoff (5) ausgestattet ist.

2. Verfahren zum Auftrennen einer feststoffhaltigen, flüssigen und pumpbaren Teersuspension (1) mit förderungsloser Verwendung des darin enthaltenen und durch Schwerkraft direkt in den kohlespeichernden Behälter (6) fallenden abgetrennten Feststoffes (5),
**dadurch gekennzeichnet, dass**
(a) eine flüssige, feststoffhaltige und pumpbare Teersuspension (1) in eine im oberen Bereich eines kohlespeichernden Behälters (6) gelegene Zentrifuge (3) gepumpt wird, und
(b) die Zentrifuge (3) die Teersuspension (1) in ein flüssiges Teerzentrifugat (4) und in einen Feststoff (5) auftrennt, und
(c) der Feststoff (5) förderungslos, ohne weitere Förderung oder Transport direkt fallend auf oder in die Kohle (7) gegeben wird, die sich in dem Kohlebehälter (6) befindet.

3. Verfahren nach Anspruch 2,
**dadurch gekennzeichnet, dass**
die feststoffhaltige, flüssige und pumpbare Teersuspension (1) aus einem Prozess zur Herstellung von Koks aus Kohle (7) stammt.

4. Verfahren nach einem der Ansprüche 2 oder 3,
**dadurch gekennzeichnet,**
**dass** der bei der Zentrifugation erhaltene, auf die Kohle (7) gegebene Feststoff (5) mit der Kohle (7) gelagert wird (5c).

## Claims

1. Device for fractionating a solids-containing, liquid and pumpable tar suspension (1) with subsequently utilising, without conveying, the solid (5) contained therein that is separated and falls by gravitational force directly into the coal storage container (6),
**characterised in that**
(a) said device consists of a centrifuge (3) arranged in the upper inner section of a coal storage container (6), and
(b) the centrifuge (3) is equipped with a feed nozzle for solids-containing liquid tar (1) and with a discharge nozzle for liquid tar centrifugate (4), and
(c) at the bottom part, the centrifuge (3) is equipped with an outlet (3a) for the solid (5) contained in the tar (1).

2. Process for fractionating a solids-containing, liquid and pumpable tar suspension (1) with utilising, without conveying, the solid (5) contained therein that falls by gravitational force directly into the coal storage container (6) and is separated,
**characterised in that**
(a) a liquid, solids-containing and pumpable tar suspension (1) is pumped into a centrifuge (3) located in the upper section of a coal storage container (6), and
(b) the centrifuge (3) fractionates the tar suspension (1) into a liquid tar centrifugate (4) and a solid (5), and
(c) without conveying, the solid (5) is added falling directly onto or into the coal (7) located in the coal container (6), without the need for further conveyance or transport.

3. Process according to Claim 2,
**characterised in that**
the solids-containing, liquid and pumpable tar suspension (1) originates from a process for the production of coke from coal (7).

4. Process according to either of Claims 2 or 3,
**characterised in that**
the solid (5) obtained by centrifugation and added onto the coal (7) is stored (5c) with the coal (7).

## Revendications

1. Dispositif pour séparer une suspension liquide et pompable (1) de goudron contenant des solides, et pour ensuite utiliser sans transport le solide (5) qui y était contenu et qui en a été séparé et qui tombe par gravité directement dans le récipient (6) de réserve de charbon,
**caractérisé en ce que**
(a) le dispositif est constitué d'une centrifugeuse (3) disposée dans la partie supérieure d'un récipient (6) de réserve de charbon et
(b) **en ce que** la centrifugeuse (3) est équipée d'une tubulure d'amenée de goudron liquide (1) contenant des solides et d'une tubulure d'évacuation du goudron liquide centrifugé (4) et
(c) **en ce que** la centrifugeuse (3) est dotée dans sa partie inférieure d'une sortie (3a) pour le solide (5) que contient le goudron (1).

2. Procédé pour séparer une suspension liquide et pompable (1) de goudron contenant des solides, et pour ensuite utiliser sans transport le solide (5) qui y était contenu et qui en a été séparé et qui tombe par gravité directement dans le récipient (6) de réserve de charbon,
**caractérisé en ce que**
(a) une suspension liquide pompable (1) de goudron contenant des solides est pompée dans une centrifugeuse (3) située dans la partie supérieure d'un récipient (6) de réserve de charbon,
(b) **en ce que** la centrifugeuse (3) sépare la suspension (1) de goudron en un centrat (4) liquide de goudron (4) et un solide (5) et
(c) **en ce que** sans transport le solide (5) est délivré, sans autre convoyage ou transport, en tombant directement sur ou dans le charbon (7) présent dans le récipient (6) à charbon.

3. Procédé selon la revendication 2, **caractérisé en ce que** la suspension liquide et pompable (1) de goudron contenant des solides provient d'un processus de fabrication de coke à partir de charbon (7).

4. Procédé selon l'une des revendications 2 ou 3, **caractérisé en ce que** le solide (5) obtenu par centrifugation et déposé sur le charbon (7) est entreposé (5c) avec le charbon (7).
